# EUROPEAN PATENT SPECIFICATION

(11) **EP 3 067 790 B1**
(45) Date of publication and mention of the grant of the patent: **17.10.2018**
(21) Application number: 14859453.4
(22) Date of filing: 06.11.2014
(51) Int. Cl.: G06F 3/048, G06F 3/16, G06F 15/02, G06F 17/30

(54) **ELECTRONIC DICTIONARY DEVICE AND PROGRAM**
ELEKTRONISCHE WÖRTERBUCHVORRICHTUNG UND PROGRAMM
DISPOSITIF ET PROGRAMME DE DICTIONNAIRE ÉLECTRONIQUE

(30) Priority: 07.11.2013 JP 2013231506
(43) Date of publication of application: 14.09.2016
(73) Proprietor: Casio Computer Co., Ltd., Tokyo 151-8543 (JP)
(72) Inventor: UNNO, Shunsuke, Hamura-shi Tokyo 205-8555 (JP)
(74) Representative: Grünecker Patent- und Rechtsanwälte PartG mbB
(86) International application number: PCT/JP2014/079456
(87) International publication number: WO 2015/068766

(56) References cited:
- JP-A- H11 136 199
- JP-A- 2000 010 932
- JP-A- 2000 010 932
- JP-A- 2012 113 352
- JP-A- 2014 063 316
- US-A1- 2007 050 432
- US-A1- 2012 131 451

## Description

### Technical Field

The present invention relates to an electronic dictionary apparatus which searches an entry word of a dictionary and displays explanatory information of the entry word, and a control program thereof.

### Background Art

In recent years, convenient electronic tools, such as electronic calculators and electronic dictionaries, are reduced in size and enhanced in function, and are used for general purposes. These electronic tools are used also in the learning in a classroom situation.

In the classroom situation, examinations in respective subjects are conducted for students. If modern calculators (scientific calculators) and electronic dictionaries with enhanced functions are used in examinations, the contents of problems, which students themselves should think and answer, could be derived by such electronic tools. Thus, in general, the use of the electronic tools is prohibited in examinations.

However, it is desirable to efficiently proceed with an examination by using the electronic tool, with respect to basic parts which do not directly influence the answers to questions.

This being the case, an electronic calculator system has been thought, which includes a parent calculator and a child calculator and is configured such that a protect instruction can be transmitted from a teacher's parent calculator to a student's child calculator during an examination, thereby to restrict some of functions, and a protect completion signal can be transmitted from the child calculator to the parent calculator (see, for example, patent document 1: Jpn. Pat. Appln. KOKAI Publication No. 2007-264745).

In addition, a multifunctional calculator has been thought, which includes a card in which information (protect information) of a function, the use of which is restricted, is stored, and is configured such that the function corresponding to this protect information is restricted by setting the card in the calculator main body, and a protect screen indicative of the state of the function restriction is displayed so that notification can be made to the outside (see, for example, patent document 2: Jpn. Pat. Appln. KOKAI Publication No. 2006-338205).

US 2007/0050432 A1) relates to an electronic apparatus having multiple functions, such as an electronic calculator. When a memory card is inserted, function disabling information recorded on a memory card is written on a flash memory of the apparatus, and a disabling of functions is started. On a menu screen, a start-up protection mark is added to an icon of a function for which start-up disabling is set. A function disabling state is released after elapsing of a count-down. When the user operates the electronic apparatus to reset only one of RAM, ROM, and an external memory, where the objective memory is designated by the user operation, it executes the reset process of only that designated memory, and a function disable state is not released. Meanwhile, when the user operates the electronic apparatus to reset all of the RAM, the ROM, and the external memory, it executes the reset process of those all of the memories. When all memory states are initialized, the function disabled state is released.

### Summary of Invention

### Technical Problem

In the above-described conventional scientific calculators, the calculator has been thought which can restrict a function during an examination and can make notification. However, in conventional electronic dictionaries, no electronic dictionary, which can properly
restrict the functions thereof, has been thought.

The present invention has been made in consideration of the above problem, and the object of the invention is to provide an electronic dictionary apparatus which can properly execute function restriction.

### Solution to Problem

An electronic dictionary apparatus according to the present invention includes restrict item list display control means for causing a display unit to display a list of items which become objects of function restriction; function restriction means for restricting a function of an item selected from the list of items displayed by the restrict item list display control means; restrict state display control means for effecting a display indicating that the function of the selected item is restricted, in a state in which the function of the selected item is restricted by the function restriction means; restrict state cancel means for canceling the state in which the function is restricted, in accordance with a user operation; and sound producing means for producing a sound for a fixed time, when restriction is canceled by the restrict state cancel means.

### Advantageous Effects of Invention

According to the present invention, function restriction, which is suited to an electronic dictionary apparatus, can be executed.

### Brief Description of Drawings

FIG. 1 is a perspective view illustrating the external-appearance structure of an electronic dictionary apparatus 10 according to an embodiment of the present invention.
FIG. 2 is a block diagram illustrating the configuration of an electronic circuit of the electronic dictionary apparatus 10.
FIG. 3 is a view illustrating the contents of restrict function information 22e which is stored in a storage device 22 of the electronic dictionary apparatus 10.
FIG. 4 is a flowchart illustrating the entire process of the electronic dictionary apparatus 10.
FIG. 5 is a flowchart illustrating a dictionary search process in the entire process of the electronic dictionary apparatus 10.
FIG. 6 is a flowchart illustrating a reset process of the electronic dictionary apparatus 10.
FIG. 7 is a view illustrating a display operation (part 1) which is involved in the setting of a restrict function in the entire process of the electronic dictionary apparatus 10.
FIG. 8 is a view illustrating a display operation (part 2) which is involved in the setting of the restrict function in the entire process of the electronic dictionary apparatus 10.
FIG. 9 is a view illustrating a display operation which is involved in a dictionary search process of the electronic dictionary apparatus 10.

### Description of Embodiments

An embodiment of the present invention will be described hereinafter with reference to the accompanying drawings.

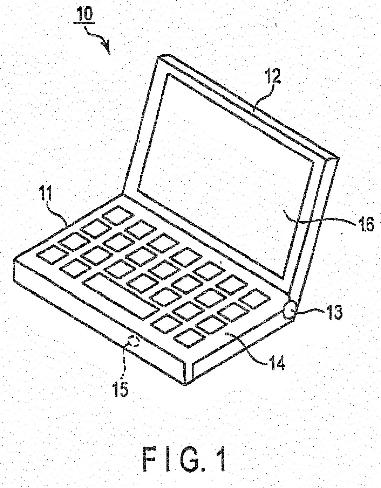

FIG. 1 is a perspective view illustrating the external-appearance structure of an electronic dictionary apparatus 10 according to the embodiment of the present invention.

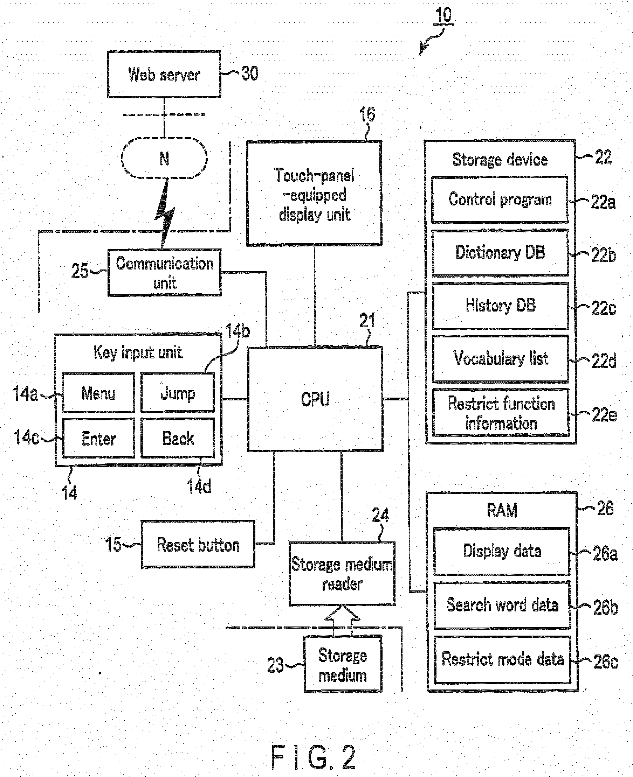

FIG. 2 is a block diagram illustrating the configuration of an electronic circuit of the electronic dictionary apparatus 10.

This electronic dictionary apparatus 10 is configured as a portable device dedicated to an electronic dictionary, which will be described below, or is configured as a touch-panel type PDA (personal digital assistants), PC (personal computer), mobile phone, electronic book, portable game machine, etc., which have dictionary functions.

This electronic dictionary apparatus 10 is configured to include a folding-type case including a body case 11 and a cover case 12 which are unfoldable/foldable via a hinge portion 13. A key input unit 14 is provided on the surface of the body case 11 in a state in which the folding-type case is unfolded.

This key input unit 14 is provided with character input keys for inputting characters, for example, for inputting a search word, and is also provided with a [Menu] key 14a for displaying a menu screen on which functions including various dictionaries are displayed as select items; a [Jump] key 14b for setting a jump function for directly designating a word which is being displayed, and executing an entry word search; an [Enter] key 14c for determining an input search word or a selected item; and a [Back] key 14d for restoring the operation state in a step-by-step manner. The bottom surface of the body case 11 is provided with a reset button 15 for resetting the operation state to the initial state, at a time of replacing a battery or in case of an overrun of a program in the apparatus due to some cause.

In addition, a touch-panel display unit 16 with a backlight is provided on the entire surface of the cover case 12. This touch-panel display unit 16 is configured such that a touch-position detection device, which detects a position touched by a user with a pen or a finger, and a display device are integrated, and such that a transparent touch panel is laid over a backlight-equipped color liquid crystal display screen of the touch-panel display unit 16.

This electronic dictionary apparatus 10 is composed of a computer which reads in programs stored in various kinds of storage media, and the operation of the computer is controlled by the read-in programs. The electronic circuit of the electronic dictionary apparatus 10 is provided with a CPU (central processing unit) 21.

This CPU 21 controls operations of respective components of the circuit by using a RAM 26 as a working memory, in accordance with an apparatus control program 22a which is prestored in a storage device 22, or an apparatus control program 22a which is read in the storage device 22 from an external storage medium 23, such as a ROM card, via a storage medium reader 24, or an apparatus control program 22a which is read in the storage device 22 from a Web server (a program server in this case) on the Internet N via a communication unit 25.

The apparatus control program 22a, which is stored in the storage device 22, is activated in accordance with an input signal according to a user operation from the key input unit 14, reset button 15 or touch-panel display unit 16, or a communication signal by communication with respective Web servers 30 on the Internet N, which are connected via the communication unit 25.

In this manner, the storage device 22, storage medium reader 24, communication unit 25, RAM 26, key input unit 14, reset button 15 and touch-panel display unit 16 are connected to the CPU 21.

The storage device 22 stores, as the apparatus control program 22a, for instance, a system program which controls the entire operation of the electronic dictionary apparatus 10, and a communication program for executing data communication with the respective servers 30 on the Internet N or a user PC (Personal Computer) (not shown) via the communication unit 25. In addition, the storage device 22 stores, as the apparatus control program 22a, a dictionary search program for controlling all of search/registration/read/display processes based on a dictionary database 22b, a search history database 22c, a vocabulary list data 22d and restrict function information 22e which are stored in the storage device 22, these processes including a search word input process, an entry word search process corresponding to a search word, a list display process with preview of searched entry words, a readout display process of various pieces of explanatory information such as a meaning, an example and an explanation corresponding to a selected entry word, a registration/readout process of a search history [History], a registration/readout process of a vocabulary list [Vocabulary List], and a restrict process of restricting usable functions for a dictionary search.

The dictionary database 22b stores, for example, English-related dictionaries [English], French-related dictionaries [French], Spanish-related dictionaries [Spanish], and other dictionaries [Other]. Each of the respective language-related dictionaries includes a monolingual dictionary [Monolingual dictionary] including, as entry words, the words of the corresponding language, such as an English-English dictionary, a bilingual dictionary [Bilingual dictionary] such as an English-French dictionary, and a loanword dictionary [Loanword dictionary]. Further, some dictionary is accompanied with an appendix of dictionary [Appendix of dictionary] (e.g. chronology, units, explanation of grammar),

In the search history database 22c, entry words, which were actually searched by the dictionary search function of the present apparatus, and explanatory information corresponding to which was displayed, are successively accumulated and stored.

The vocabulary list data 22d stores those of the entry words of the dictionaries of the present apparatus, which were registered by the user as objects of learning.

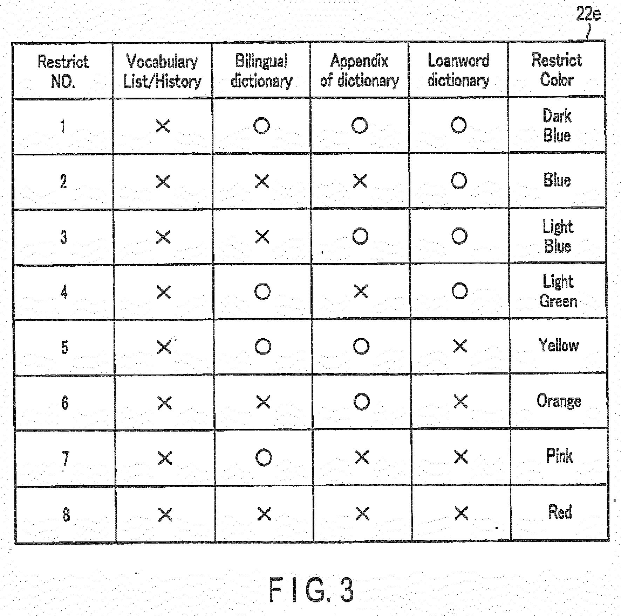

FIG. 3 is a view illustrating the contents of the restrict function information 22e which is stored in the storage device 22 of the electronic dictionary apparatus 10.

The restrict function information 22e is information of a function (item), the use of which is disabled by the electronic dictionary apparatus 10, for example, at a time of an examination in a school. In this example, four restrict items, namely the vocabulary list/search history function, bilingual dictionary, appendix of dictionary, and loanword dictionary, are set as restrict items. In accordance with the kind of combination of the items restricted, a restrict number (Restrict NO.) and a restrict color (Restrict Color) are associated with each combination and stored.

If a concrete example of the combination of restrict items is illustrated, at restrict number "1", only the [Vocabulary List/History] function of the four restrict items is set as a restrict item, and the restrict color "Dark Blue" is set. In the meantime, the use of this [Vocabulary List/History] function in examinations is prohibited in all combinations of restrict items, since the user can pre-register arbitrary entry words by this function.

In the RAM 26, a display data memory 26a, a search word data memory 26b and a restrict mode data memory 26c are secured.

The display data memory 26a stores display data which is displayed on the touch-panel display unit 16, such that the display data is developed into bitmap patterns.

The search word data memory 26b stores a character string of a search word which was specified as a search target and was input to a search word input area SW of the dictionary.

The restrict mode data memory 26c stores data indicative of a state in which the function in the electronic dictionary apparatus 10 is restricted. Specifically, in the state in which the restrict mode is set, the restrict number, "1" to "8", which corresponds to the combination of restrict items, is stored. In the state in which the restrict mode is canceled, data "0" is stored. Incidentally, in the initial state, "0" is stored by default.

In addition, this electronic dictionary apparatus 10 includes, as normal dictionary functions, an incremental search function which searches an entry word matching with the beginning of the input character string each time the characters a search word are input one by one to the search word input area SW of an entry word search screen GS; an entry word list display function which extracts a series of entry words matching with the beginning of the search word in this incremental search, and displays a list of the extracted entry words on an entry word list area LM by distinguishably displaying (H) the first entry word; a preview display function which displays, on a preview area PE, explanatory information corresponding to the entry word which is distinguishably displayed (H), among the entry words displayed in the list form on the entry word list area LM; an explanatory information display function which displays the explanatory information of the entry word displayed on the preview area PE, by developing the explanatory information to the full area of the screen; a search history function which registers searched entry words as a history; and a vocabulary list function which registers searched entry words in accordance with a user operation. Furthermore, the electronic dictionary apparatus 10 includes a function-restrict function which restricts various dictionary functions on an as-needed basis; a restrict function setting function which selectively sets an item of a function that is to be restricted by this function-restrict function, in accordance with a user operation; a restrict content display function which displays, in the state in which the restrict mode is set, the content of the restriction by the restrict number and restrict color; and a restriction cancel sound producing function which outputs a sound meaning mode cancellation when the restrict mode is canceled.

In the electronic dictionary apparatus 10 with the above-described configuration, the CPU 21 controls the operations of the respective components of the circuit in accordance with instructions described in the apparatus control program 22a (including programs for executing the search word input process, entry word search process, entry word list display process with preview, explanatory information display process of a selected entry word, search history registration process, vocabulary list registration process, function restriction process, restrict function setting process, restrict content display process, and restrict cancel sound producing process). By the cooperative operations of software and hardware, the functions, which will be described in the following operational description, are realized.

Next, the operation of the electronic dictionary apparatus 10 with the above-described configuration is described.

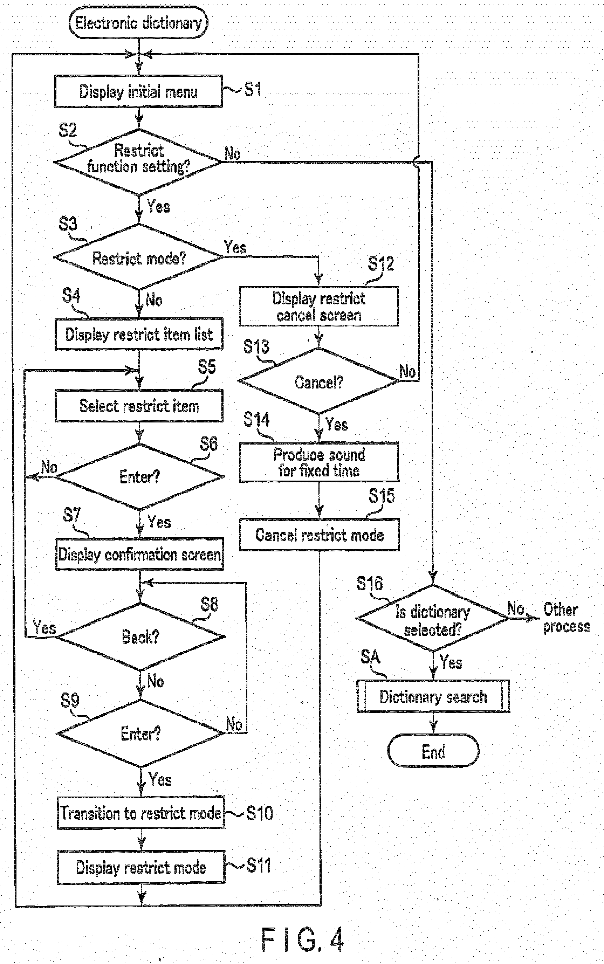

FIG. 4 is a flowchart illustrating the entire process of the electronic dictionary apparatus 10.

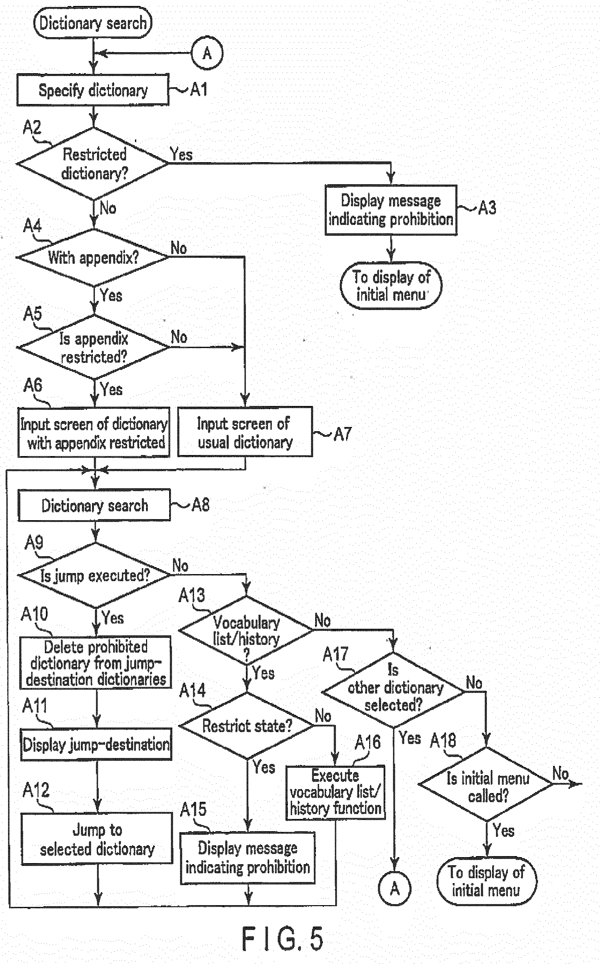

FIG. 5 is a flowchart illustrating a dictionary search process in the entire process of the electronic dictionary apparatus 10.

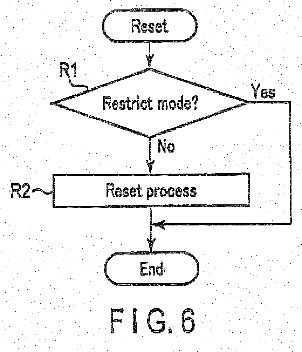

FIG. 6 is a flowchart illustrating a reset process of the electronic dictionary apparatus 10.

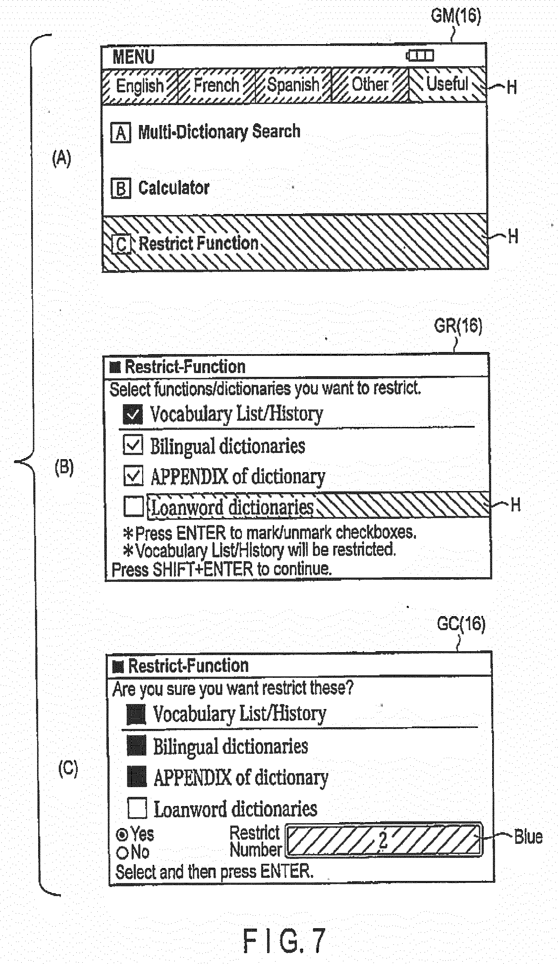

FIG. 7 is a view illustrating a display operation (part 1) which is involved in the setting of a restrict function in the entire process of the electronic dictionary apparatus 10.

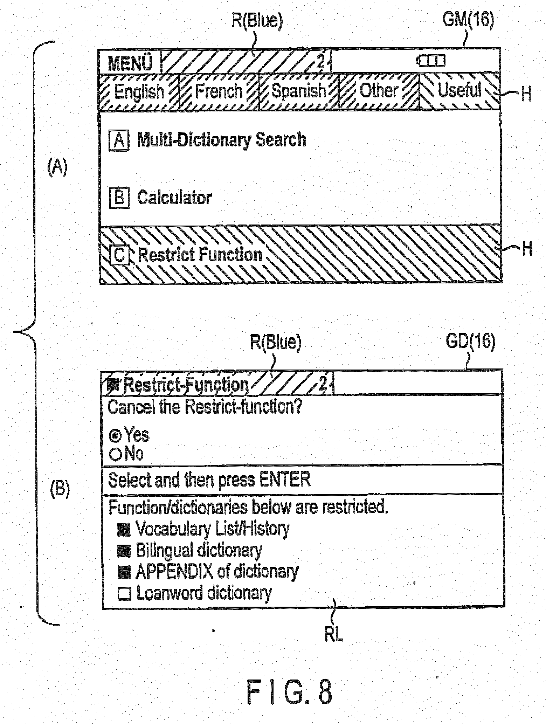

FIG. 8 is a view illustrating a display operation (part 2) which is involved in the setting of the restrict function in the entire process of the electronic dictionary apparatus 10.

If the [Menu] key 14a of the key input unit 14 is operated, a menu screen GM, on which the functions of the present apparatus are arranged as select items, is displayed on the touch-panel display unit 16, as illustrated in part (A) of FIG. 7 (step S1). On this menu screen GM, the user can select English-related dictionaries [English], French-related dictionaries [French], Spanish-related dictionaries [Spanish], or other dictionaries [Other]. In addition, by selecting a useful function [Useful], the user can execute "Multi-Dictionary Search", "Calculator" or "Setting of Restrict Function".

On the menu screen GM, if the useful function [Useful] is selected and the setting item [Restrict Function] of the restrict function, among the items of the useful function, is selected (step S2 (Yes)), mode data stored in the restrict mode data memory 26c is read out, and it is determined whether the present mode is the restrict mode or not (step S3).

If it is determined that the present mode is not the restrict mode (step S3 (No)), as illustrated in part (B) of FIG. 7, a restrict item list screen GR, in which respective restrict items and checkboxes are listed, is displayed on the touch-panel display unit 16 (step S4).

On this restrict item list screen GR, the item [Vocabulary List/History] of the vocabulary list/search history function is set to be restricted by default.

Then, it is assumed that, for example, under the guidance of a teacher, items [Bilingual dictionary] and [Appendix of dictionary] were selected by a student (user) as items, the use of which needs to be restricted during an examination. Next, if the [Enter] key 14c is operated (step S5, S6 (Yes)), the restrict content is compared with the restrict function information 22e (see FIG. 3), and it turns out that the restrict content agrees with the combination of the second item. As illustrated in part (C) of FIG. 7, a restrict function confirmation screen GC for confirming the setting state of the restrict function is displayed on the touch-panel display unit 16 (step S7).

On this restrict function confirmation screen GC, the restrict content, which was set this time on the restrict item list screen GR, is displayed with the restrict number "2" and restrict color "Blue". Not only the user himself/herself, needless to say, but also a third party, such as a teacher, can easily and clearly confirm the restrict content.

If the [Back] key 14d is operated on the restrict function confirmation screen GC (step S8 (Yes)), the process returns to the select operation state of the restrict items on the restrict item list screen GR illustrated in part (B) of FIG. 7 (step S5). Here, the user can re-set the restrict items.

In addition, if the restrict mode with the restrict content appearing on the restrict function confirmation screen GC is to be set, the user selects item [Yes] and operates the [Enter] key 14c. If the [Enter] key is operated (step S9 (Yes)), data "2" is set in the restrict mode data memory 26c and the restrict mode of the combination of the second restrict item is set (step S10). Then, as illustrated in part (A) of FIG. 8, a restrict mode display R, in which the restrict number "2" corresponding to the restrict mode that is being set, together with a strip area of the restrict color "Blue", is displayed on the upper part of the display screen, and the process returns to the menu screen GM (step S11 → S1).

In this manner, in the state in which the restrict mode is set, the restrict mode display R, which includes the restrict number "2" corresponding to the restrict mode that is being set, and the strip area of the restrict color "Blue", is always effected. Thus, for example, during an examination which the student, or the user, is taking, it can easily and clearly be confirmed from a proctor, such as a teacher, that the present apparatus is set in the restrict mode corresponding to the present examination.

On the other hand, in the state in which the restrict mode is set, if the user wishes to confirm the currently set restrict function or wishes to cancel the restriction, the user performs an operation of selecting the setting item [Restrict Function] of the restrict function from the useful function [Useful] of the menu screen GM. If the setting item [Restrict Function] of the restrict function is selected (step S2 → S3 (Yes)), as illustrated in part (B) of FIG. 8, a list display RL of currently set restrict items is displayed on the lower half part, and a function-restrict cancel screen GD is displayed on the upper half part (step S12).

On this function-restrict cancel screen GD, if item [Yes] instructing restriction cancel [Cancel the Restrict-function?] is selected and the [Enter] key 14c is operated (step S13 (Yes)), an electronic sound meaning the cancellation of the restriction is produced for a fixed time (step S14).

Then, the mode data, which is stored in the restrict mode data memory 26c, is set to "0", and the restrict mode is canceled (step S15).

In this manner, when the restrict mode is canceled, the electronic sound meaning the cancellation of the restrict mode is produced for a fixed time. Thus, for example, if the student, or the user, cancels the restrict mode during the examination, this is immediately discovered by the proctor such as the teacher.

On the other hand, on the function-restrict cancel screen GD, after the restrict item list display RL is confirmed, if item [No] for not effecting the restriction cancel [Cancel the Restrict-function?] is selected and the [Enter] key 14c is operated (step S13 (No)), the process returns to the display of the menu screen GM on which the restrict mode display R was added as illustrated in part (A) of FIG. 8 (step S1).

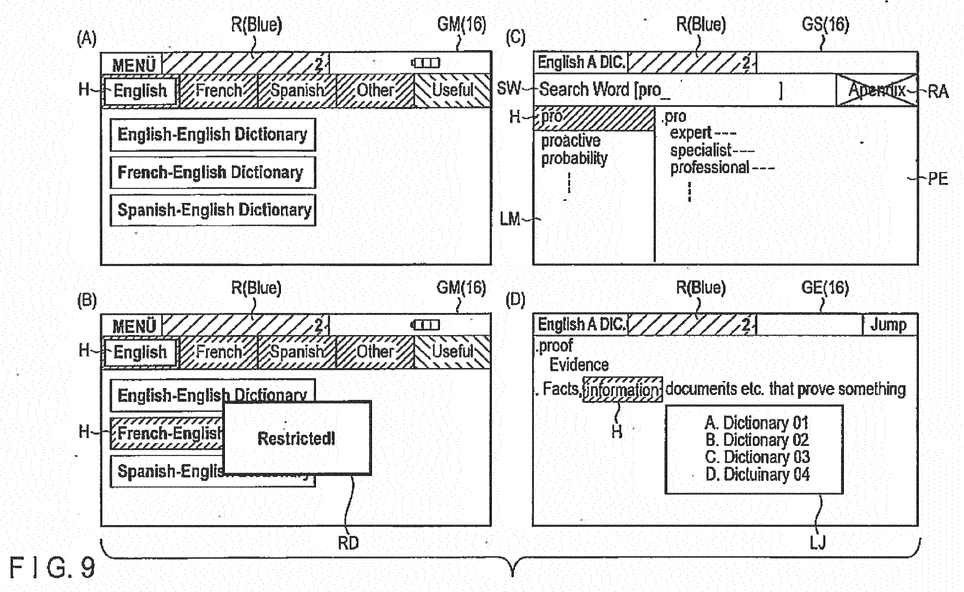

FIG. 9 is a view illustrating a display operation which is involved in a dictionary search process of the electronic dictionary apparatus 10.

As illustrated in part (A) of FIG. 8, in the state in which the restrict mode (restrict number "2") is set, if the item [English] of the English-related dictionaries is selected on the menu screen GM (step S16 (Yes)), a dictionary search process illustrated in FIG. 5 is activated, and an English-related dictionary list of the English-English dictionary [English-English], French-English dictionary [French-English] and Spanish-English dictionary [Spanish-English] is displayed, as illustrated in part (A) of FIG. 9 (step SA).

In this English-related dictionary list, if the French-English dictionary [French-English], which is a bilingual dictionary [Bilingual dictionary], is designated, as illustrated in part (B) of FIG. 9 (step A1), the designated dictionary is determined to be a restricted dictionary in accordance with the restrict function information (restrict number "2") 22e of the above-described restrict mode data (step A2 (Yes)), and a message "Restricted" RD indicating prohibition of use is displayed and notified to the user (step A3).

Then, on the display screen of the English-related dictionary list illustrated in part (A) of FIG. 9, if the English-English dictionary [English-English] is designated, the designated dictionary is determined to be an unrestricted dictionary (step A1, A2 (No)). Subsequently, it is determined whether the English-English dictionary is a dictionary with an appendix or not (step A4).

If it is determined that the English-English dictionary is a dictionary with an appendix (step A4 (Yes)), it is determined whether the reference to the appendix data is prohibited or not (step A5). If it is determined that the appendix is restricted, in accordance with the restrict function information (restrict number "2" [Appendix of dictionary]) 22e (step A5 (Yes)), an appendix restriction display RA indicating the restriction of use of an appendix is displayed on the touch-panel display unit 16 (step A6). Part (C) of FIG. 9 illustrates a state in which the appendix restriction display RA is displayed on a search word input screen GS of the English-English dictionary, which is composed of a search word input area SW, an entry word list area LM and an explanatory information preview area PE.

In the meantime, if it is determined that the English-English dictionary is not a dictionary with an appendix (step A4 (No)), the search word input screen GS without the appendix restriction display RA is displayed on the touch-panel display unit 16 (step A7).

Then, on the search word input screen GS of the English-English dictionary, for example, if an entry word corresponding to a search word "proof" is searched, an explanatory information display screen GE thereof is displayed on the touch-panel display unit 16, as illustrated in part (D) of FIG. 9 (step A8).

On the explanatory information display screen GE, the user can execute a jump function. The jump function is executed by designating a word to be checked and operating the [Enter] key 14c, in the state in which a [Jump] key 14b is operated and a jump mode is set. As illustrated in part (D) of FIG. 9, if a word "information" is designated in the jump mode and the [Enter] key 14c is operated (step A9 (Yes)), the names of dictionaries, the use of which is prohibited in accordance with the restrict function information (restrict number "2") corresponding to the current restrict mode, are deleted from various jump-destination dictionaries having the language of the designated word as the entry word (step A10). Specifically, even in the case where a bilingual dictionary is usually included as a jump-destination dictionary, such a dictionary is excluded from jump-destination dictionary candidates in the restrict mode. A candidate list of dictionary names, which are jump-destination candidates generated in this manner, is displayed as a jump-destination dictionary list LJ (step A11).

Then, if a dictionary to be searched is selected from this jump-destination dictionary list LJ, a jump occurs to the selected dictionary, and a dictionary search with the designated word "information" as an entry word is executed (step A12), and the explanatory information display screen GE thereof is displayed (step A8).

On the other hand, if the jump function is not executed and a vocabulary list function or a search history function is selected (step A13 (Yes)), it is determined whether the vocabulary list function or search history function is restricted or not, in accordance with the restrict function information (restrict number "2" [Vocabulary List/History]) 22e of the above-described restrict mode data (step A14). If it is determined that these functions are restricted (step A14 (Yes)), a message "Restricted" RD indicating prohibition of use is displayed and notified to the user (step A15).

In the meantime, when the vocabulary list function or search history function was selected (step A13 (Yes)), if it is determined that the restrict mode data "0" and there is no restriction (step A14 (No)), the selected vocabulary list function or search history function is executed, and entry words registered in the vocabulary list data 22d or search history database 22c are read out and displayed in a list form (step A16).

Further, if another dictionary is selected and designated (step A17 (Yes)), the process from step A1 is similarly executed.

In addition, if the [Menu] key 14a is operated (step A18 (Yes)), the process returns to the display of the initial menu screen GM illustrated in part (A) of FIG. 8 (step S1).

In the meantime, if the reset button 15, which is provided on the back surface of the present apparatus, is operated, it is determined whether a restrict mode, in which a numerical value other than "0" is stored as restrict mode data in the restrict mode data memory 26c, is set or not (step R1).

If the state in which the restrict mode is set is determined (step R1 (Yes)), a reset process is not executed.

On the other hand, if it is determined that the restrict mode is not set (step R1 (No)), the reset process is executed (step R2).

In this manner, in the state in which the restrict mode is set, reset to the initial state is prohibited even if the reset button 15 is operated. Thus, it is not possible for the student, or the user, to cancel the restrict mode by reset, after the restrict mode was set at a time of an examination, and to make use of the prohibited functions.

Therefore, according to the electronic dictionary apparatus 10 with the above-described structure, when the restrict function is set, the restrict item list screen GR, in which the respective restrict items and the restrict setting states thereof are indicated in the list form, is displayed on the touch-panel display unit 16, and, for example, selective designation of restrict items, the use of which needs to be restricted during an examination, is prompted. In addition, in the state in which the restrict mode is set, the restrict mode display R, which is composed of the restrict number and restrict color corresponding to the restrict content of the restrict mode, is effected. If the cancellation of the restrict mode is instructed from the function-restrict cancel screen GD, the electronic sound meaning the cancellation of the restrict mode is produced for a fixed time.

Thus, for example, under the guidance of a teacher, the restrict items, the use of which needs to be restricted during an examination, can be not only selected and designated, but the teacher can also easily and clearly confirm at all times the setting state of the restrict mode of the present apparatus by the restrict mode display R. Moreover, if the restrict mode is canceled, the cancellation is notified by the electronic sound. Therefore, the electronic dictionary apparatus 10 can be effectively used not only in the classroom situation, needless to say, but also in examinations.

In the meantime, the methods of the respective processes by the electronic dictionary apparatus 10, which has been described in each of the embodiments, that is, the respective methods of the entire process of the electronic dictionary illustrated in the flowchart of FIG. 4, the dictionary search process in the entire process illustrated in the flowchart of FIG. 5, and the reset process illustrated in the flowchart of FIG. 6, can all be stored as computer-executable programs (22a) in a medium (23) of an external storage device, such as a memory card (ROM card, RAM card, etc.), a magnetic disk (floppy disk, hard disk, etc.), an optical disc (CD-ROM, DVD, etc.), or a semiconductor memory, and can be distributed. In addition, the computer (controller 21) of the electronic apparatus including the dictionary function reads the program (22a), which is stored in the medium (23) of the external storage device, into the storage device (22), and the operation is controlled by this read-in program (22a). Thereby, it is possible to realize the function-restrict function in the electronic dictionary, which has been described in each of the embodiments, and to execute the same processes by the above-described methods.

In addition, the data (22a) of the program for realizing each of the above-described methods can be transmitted on a communication network (N) in the form of a program code, and the data (22a) of the program can be taken in the electronic device including the dictionary function from a computer apparatus (program server 30) connected to this communication network (N), and stored in the storage device (22), thereby realizing the above-described function-restrict function in the electronic dictionary.

### Reference Signs List

- 10...: Electronic dictionary apparatus
- 14...: Key input unit
- 14a...: [Menu] key
- 14b...: [Jump] key
- 14c...: [Enter] key
- 14d...: [Back] key
- 15...: Reset button
- 15...: Touch-panel display unit
- 21...: CPU
- 22...: Storage device
- 22a...: Apparatus control program
- 22b...: Dictionary database
- 22c...: Search history database
- 22d...: Vocabulary list data
- 22e...: Restrict function information
- 23...: External storage medium
- 24...: Storage medium reader
- 25...: Communication unit
- 26...: RAM
- 26a...: Display data memory
- 26b...: Search word data memory
- 26c...: Restrict mode data memory
- 30...: Web server

## Claims

1. An electronic apparatus (10) comprising:
function restriction means for restricting executable functions, in accordance with a user operation;
restrict state display control means for effecting a display indicating that the function is restricted, in a state in which the function is restricted by the function restriction means;
restrict state cancel means for canceling the state in which the function is restricted, in accordance with a user operation;
a reset button (15) which is operated at a time of resetting a main body of the apparatus into an initial state;
**characterized by**
restrict item list display Control means for causing a display unit (16) to display a list of a plurality of items which are objects of function restriction,
wherein
the function restriction means is configured to restrict a function of an item selected from the list of the plurality of items displayed by the restrict item list display control means and
reset disabling control means for prohibiting reset to the initial state even if the reset button (15) is operated, in a state in which the function is restricted.

2. The electronic apparatus (10) according to claim 1, the electronic apparatus being an electronic dictionary apparatus and further comprising:
sound producing means for producing a sound for a fixed time, when restriction is canceled by the restrict state cancel means,
wherein
the restrict state display control means is configured to effect a display indicating that the function of the selected item is restricted, in a state in which the function of the selected item is restricted by the function restriction means.

3. The electronic dictionary apparatus (10) of claim 2, further comprising:
jump dictionary search means for executing a dictionary search by using a dictionary designated from a dictionary list displayed as a jump destination, with respect to a word designated from explanatory information of a dictionary displayed on the display unit (16); and
jump-destination dictionary restrict means for deleting, in the state in which the function is restricted, a dictionary name corresponding to the function of the selected item, from the dictionary list displayed by the jump dictionary search means.

4. The electronic apparatus of claim 2, wherein the items which become the objects of the function restriction include at least a vocabulary list function or a search history function.

5. The electronic apparatus (10) of claim 2, further comprising:
dictionary designation means for designating a dictionary in accordance with a user operation; and
restriction notification means for making, when the dictionary designated by the dictionary designation means is a dictionary corresponding to the function of the selected item in the state in which the function is restricted, notification that use of the dictionary is restricted.

6. The electronic dictionary apparatus (10) of claim 2, wherein, in a state in which the function of the selected item is restricted, the restrict state display control means causes the display unit (16) to effect a display of a color which is different in accordance with the selected item.

7. The electronic apparatus (10) according to claim 2, further comprising:
item designation operation acceptation means for accepting an operation of designating one or more items from the list of the plurality of items displayed by the restrict item list display control means;
wherein the function restriction means is configured to restrict a function of the one or more items whose designation has been accepted by the item designation operation acceptation means; and
the restrict state display control means is configured to effect a display indicating that the functions of the one or more items are restricted and being made to be different from one another in accordance with a combination of the one or more items, in a state in which the functions of the one or more items are restricted by the function restriction means.

8. A computer readable program for controlling a computer of an electronic apparatus (10) the program causing the computer to function as:
function restriction means for restricting executable functions, in accordance with a user operation;
restrict state display control means for effecting a display indicating that the function is restricted, in a state in which the function is restricted by the function restriction means;
restrict state cancel means for canceling the state in which the function is restricted, in accordance with a user operation;
a reset button (15) which is operated at a time of resetting a main body of the apparatus into an initial state
**characterized by**
restrict item list display control means for causing a display unit (16) to display a list of a plurality of items which are objects of function restriction,
wherein
the function restriction means is configured to restrict a function of an item selected from the list of the plurality of items displayed by the restrict item list display control means; and
reset disabling control means for prohibiting reset to the initial state even if the reset button (15) is operated, in a state in which the function is restricted.

9. The computer readable program according to claim 8, the program being a program for controlling a computer of an electronic apparatus (10) including a dictionary function, and further comprising:
sound producing means for producing a sound for a fixed time, when restriction is canceled by the restrict state cancel means,
wherein
the restrict state display control means is configured to effect a display indicating that the function of the selected item is restricted, in a state in which the function of the selected item is restricted by the function restriction means.

10. The computer readable program according to claim 9, further comprising:
item designation operation acceptation means for accepting an operation of designating one or more items from the list of the plurality of items displayed by the restrict item list display control means;
wherein the function restriction means is configured to restrict a function of the one or more items whose designation has been accepted by the item designation operation acceptation means; and
the restrict state display control means is configured to effect a display indicating that the functions of the one or more items are restricted and being made to be different from one another in accordance with a combination of the one or more items, in a state in which the functions of the one or more items are restricted by the function restriction means.

## Patentansprüche

1. Elektronische Vorrichtung (10), umfassend:
ein Funktionseinschränkungsmittel zum Einschränken ausführbarer Funktionen, gemäß einer Bedienung durch einen Benutzer;
ein Einschränkungszustandsanzeigesteuermittel zur Bewirkung einer Anzeige, die besagt, dass die Funktion eingeschränkt ist, in einem Zustand, in welchem die Funktion durch das Funktionseinschränkungsmittel eingeschränkt ist;
ein Einschränkungszustandsaufhebungsmittel zur Aufhebung des Zustands, in dem die Funktion eingeschränkt ist, gemäß einer Bedienung durch einen Benutzer;
eine Rückstelltaste (15), welche betätigt wird zu einer Zeit der Rückstellung eines Hauptteils der Vorrichtung in einen Anfangszustand;
**gekennzeichnet durch**
ein Einschränkungsgegenstandslistenanzeigesteuermittel zur Veranlassung einer Anzeigeeinrichtung (16), eine Liste einer Mehrzahl von Gegenständen, die Objekte der Funktionseinschränkung sind, anzuzeigen,
wobei
das Funktionseinschränkungsmittel eingerichtet ist, eine Funktion eines Gegenstands, der von der durch das Einschränkungsgegenstandslistenanzeigesteuermittel angezeigten Liste der Mehrzahl von Gegenständen ausgewählt ist, einzuschränken und
ein Rückstellsperrsteuermittel zur Verhinderung der Rückstellung zu dem Anfangszustand in einem Zustand, in dem die Funktion eingeschränkt ist, selbst wenn die Rückstelltaste (15) betätigt wird.

2. Elektronische Vorrichtung (10) nach Anspruch 1, wobei die elektronische Vorrichtung eine elektronische Wörterbuchvorrichtung ist und außerdem umfasst:
ein Geräuscherzeugungsmittel zur Erzeugung eines Geräuschs für eine festgelegte Zeit, wenn Einschränkung durch das Einschränkungszustandsaufhebungsmittel aufgehoben wird,
wobei
das Einschränkungszustandsanzeigesteuermittel eingerichtet ist, in einem Zustand, in dem in dem die Funktion des ausgewählten Gegenstands durch das Funktionseinschränkungsmittel eingeschränkt ist, eine Anzeige zu bewirken, die besagt, dass die Funktion des ausgewählten Gegenstands eingeschränkt ist.

3. Elektronische Wörterbuchvorrichtung (10) nach Anspruch 2, außerdem umfassend:
ein Wörterbuchsprungsuchmittel zur Ausführung einer Wörterbuchsuche unter Benutzung eines von einer angezeigten Wörterbuchliste bestimmten Wörterbuchs als Sprungziel, in Bezug auf ein aus erläuternder Information eines auf der Anzeigeeinrichtung (16) angezeigten Wörterbuchs bestimmtes Wort; und
ein Sprungzielwörterbucheinschränkungsmittel zur Löschung eines der Funktion des ausgewählten Gegenstands entsprechenden Wörterbuchnamens aus der vom Wörterbuchsprungsuchmittel angezeigten Wörterbuchliste, in dem Zustand, in dem die Funktion eingeschränkt ist.

4. Elektronische Vorrichtung (10) nach Anspruch 2, wobei die Gegenstände, welche zu den Objekten der Funktionseinschränkung werden, zumindest eine Vokabellistenfunktion oder eine Suchhistorienfunktion umfassen.

5. Elektronische Vorrichtung (10) nach Anspruch 2, außerdem umfassend:
ein Wörterbuchbestimmungsmittel zur Bestimmung eines Wörterbuchs gemäß einer Bedienung durch einen Benutzer; und
ein Einschränkungsbenachrichtigungsmittel zur Benachrichtigung, dass die Benutzung des Wörterbuchs eingeschränkt ist, wenn das durch das Wörterbuchbestimmungsmittel bestimmte Wörterbuch ein der Funktion des ausgewählten Gegenstands im Zustand, in dem die Funktion eingeschränkt ist, entsprechendes Wörterbuch ist.

6. Elektronische Wörterbuchvorrichtung (10) nach Anspruch 2, wobei, in einem Zustand, in dem die Funktion des ausgewählten Gegenstands eingeschränkt ist, das Einschränkungszustandsanzeigesteuermittel die Anzeigeeinrichtung (16) veranlasst, eine Anzeige einer anderen Farbe gemäß dem ausgewählten Gegenstand zu bewirken.

7. Elektronische Vorrichtung (10) nach Anspruch 2, außerdem umfassend:
ein Gegenstandbestimmungsvorgangsannahmemittel zur Annahme eines Vorgangs der Bestimmung eines oder mehrerer Gegenstände von der durch das Einschränkungsgegenstandslistenanzeigesteuermittel angezeigten Liste der Mehrzahl von Gegenständen;
wobei das Funktionseinschränkungsmittel dazu eingerichtet ist, eine Funktion des einen oder der mehreren Gegenstände, deren Bestimmung durch das Gegenstandsbestimmungsvorgangsannahmemittel angenommen worden ist, einzuschränken; und
das Einschränkungszustandsanzeigesteuermittel eingerichtet ist, in einem Zustand, in dem die Funktionen des einen oder der mehreren Gegenstände durch das Funktionseinschränkungsmittel eingeschränkt sind, eine Anzeige zu bewirken, die besagt, dass die Funktionen des einen oder der mehreren Gegenstände eingeschränkt und voneinander verschieden gemacht sind gemäß einer Kombination des einen oder der mehreren Gegenstände.

8. Computerlesbares Programm zur Steuerung eines Computers einer elektronischen Vorrichtung (10) wobei das Programm den Computer veranlasst zu funktionieren als:
ein Funktionseinschränkungsmittel zum Einschränken ausführbarer Funktionen, gemäß einer Bedienung durch einen Benutzer;
ein Einschränkungszustandsanzeigesteuermittel zur Bewirkung einer Anzeige, die besagt, dass die Funktion eingeschränkt ist, in einem Zustand, in welchem die Funktion durch das Funktionseinschränkungsmittel eingeschränkt ist;
ein Einschränkungszustandsaufhebungsmittel zur Aufhebung des Zustands, in dem die Funktion eingeschränkt ist, gemäß einer Bedienung durch einen Benutzer;
eine Rückstelltaste (15), welche betätigt wird zu einer Zeit der Rückstellung eines Hauptteils der Vorrichtung in einen Anfangszustand
ein Einschränkungsgegenstandslistenanzeigesteuermittel zur Veranlassung einer Anzeigeeinrichtung (16), eine Liste einer Mehrzahl von Gegenständen, die Objekte der Funktionseinschränkung sind, anzuzeigen,
wobei
das Funktionseinschränkungsmittel eingerichtet ist, eine Funktion eines Gegenstands, der von der durch das Einschränkungsgegenstandslistenanzeigesteuermittel angezeigten Liste der Mehrzahl von Gegenständen ausgewählt ist, einzuschränken; und
ein Rückstellsperrsteuermittel zur Verhinderung der Rückstellung zu dem Anfangszustand in einem Zustand, in dem die Funktion eingeschränkt ist, selbst wenn die Rückstelltaste (15) betätigt wird.

9. Computerlesbares Programm nach Anspruch 8, wobei das Programm ein Programm zur Steuerung eines Computers einer eine Wörterbuchfunktion umfassenden elektronischen Vorrichtung (10) ist, und außerdem umfassend:
ein Geräuscherzeugungsmittel zur Erzeugung eines Geräuschs für eine festgelegte Zeit, wenn Einschränkung durch das Einschränkungszustandsaufhebungsmittel aufgehoben wird,
wobei
das Einschränkungszustandsanzeigesteuermittel eingerichtet ist, in einem Zustand, in dem in dem die Funktion des ausgewählten Gegenstands durch das Funktionseinschränkungsmittel eingeschränkt ist, eine Anzeige zu bewirken, die besagt, dass die Funktion des ausgewählten Gegenstands eingeschränkt ist.

10. Computerlesbares Programm nach Anspruch 9, außerdem umfassend:
ein Gegenstandbestimmungsvorgangsannahmemittel zur Annahme eines Vorgangs der Bestimmung eines oder mehrerer Gegenstände von der durch das Einschränkungsgegenstandslistenanzeigesteuermittel angezeigten Liste der Mehrzahl von Gegenständen;
wobei das Funktionseinschränkungsmittel dazu eingerichtet ist, eine Funktion des einen oder der mehreren Gegenstände, deren Bestimmung durch das Gegenstandsbestimmungsvorgangsannahmemittel angenommen worden ist, einzuschränken; und
das Einschränkungszustandsanzeigesteuermittel eingerichtet ist, in einem Zustand, in dem die Funktionen des einen oder der mehreren Gegenstände durch das Funktionseinschränkungsmittel eingeschränkt sind, eine Anzeige zu bewirken, die besagt, dass die Funktionen des einen oder der mehreren Gegenstände eingeschränkt und voneinander verschieden gemacht sind gemäß einer Kombination des einen oder der mehreren Gegenstände.

## Revendications

1. Appareil électronique (10) comprenant :
un moyen de restriction de fonction permettant de restreindre des fonctions exécutables conformément à une opération d'un utilisateur ;
un moyen de commande d'affichage d'état restreint permettant d'effectuer un affichage indiquant que la fonction est restreinte, dans un état de restriction de la fonction par le moyen de restriction de fonction ;
un moyen d'annulation d'état restreint permettant d'annuler l'état de restriction de la fonction, conformément à une opération d'un utilisateur ;
un bouton de réinitialisation (15) qui est actionné au moment de réinitialiser un corps principal de l'appareil pour retrouver un état initial ;
**caractérisé par**
un moyen de commande d'affichage de liste d'éléments restreints permettant de faire afficher par une unité d'affichage (16) une liste d'une pluralité d'éléments qui sont objets d'une restriction de fonction,
dans lequel
le moyen de restriction de fonction est configuré pour restreindre une fonction d'un élément sélectionné dans la liste de la pluralité d'éléments qui est affichée par le moyen de commande d'affichage de liste d'éléments restreints et
un moyen de commande de désactivation de réinitialisation permettant d'empêcher une réinitialisation vers l'état initial même si le bouton de réinitialisation (15) est actionné, dans un état de restriction de la fonction.

2. Appareil électronique (10) selon la revendication 1, l'appareil électronique étant un appareil formant dictionnaire électronique et comprenant, en outre :
un moyen de production de son permettant de produire un son pendant une durée fixée lorsque la restriction est annulée par le moyen d'annulation d'état restreint,
dans lequel
le moyen de commande d'affichage d'état restreint est configuré pour effectuer un affichage indiquant que la fonction de l'élément sélectionné est restreinte, dans un état de restriction de la fonction de l'élément sélectionné par le moyen de restriction de fonction.

3. Appareil (10) formant dictionnaire électronique selon la revendication 2, comprenant, en outre :
un moyen de recherche de dictionnaires par saut ("*jump*") permettant d'exécuter une recherche de dictionnaire en utilisant un dictionnaire désigné, à partir d'une liste de dictionnaires affichée, comme destination du saut ("*jump destination*"), par rapport à un mot désigné à partir d'une information explicative d'un dictionnaire affiché sur l'unité d'affichage (16) ; et
un moyen de restriction de dictionnaire de destination d'un saut permettant d'effacer, dans l'état de restriction de la fonction, un nom de dictionnaire correspondant à la fonction de l'élément sélectionné de la liste de dictionnaires qui est affichée par le moyen de recherche de dictionnaires par saut.

4. Appareil électronique selon la revendication 2, dans lequel les éléments qui qui deviennent les objets de la restriction de fonction incluent au moins une fonction " liste de vocabulaire " ou une fonction " historique de recherche ".

5. Appareil électronique (10) selon la revendication 2, comprenant, en outre :
un moyen de désignation de dictionnaire permettant de désigner un dictionnaire conformément à une opération d'un utilisateur ; et
un moyen de notification de restriction permettant, lorsque le dictionnaire désigné par le moyen de désignation de dictionnaire est un dictionnaire correspondant à la fonction de l'élément sélectionné dans l'état de restriction de la fonction, d'émettre une notification selon laquelle l'utilisation du dictionnaire est restreinte.

6. Appareil (10) formant dictionnaire électronique selon la revendication 2, dans lequel, dans un état de restriction de la fonction de l'élément sélectionné, le moyen de commande d'affichage d'état restreint fait afficher par l'unité d'affichage (16) une couleur qui est différente en fonction de l'élément sélectionné.

7. Appareil électronique (10) selon la revendication 2, comprenant, en outre :
un moyen d'acceptation d'opération de désignation d'élément permettant d'accepter une opération de désignation d'un ou de plusieurs éléments dans la liste de la pluralité d'éléments qui est affichée par le moyen de commande d'affichage de liste d'éléments restreints ;
dans lequel le moyen de restriction de fonction est configuré pour restreindre une fonction du ou des éléments dont la désignation a été acceptée par le moyen d'acceptation d'opération de désignation d'élément ; et
le moyen de commande d'affichage d'état restreint est configuré pour effectuer un affichage indiquant que les fonctions du ou des éléments sont restreintes et sont différenciées les unes des autres en fonction d'une combinaison du ou des éléments dans un état de restriction des fonctions du ou des éléments par le moyen de restriction de fonction.

8. Programme lisible par ordinateur permettant de commander un ordinateur d'un appareil électronique (10), le programme faisant en sorte que l'ordinateur fonctionne en tant que :
moyen de restriction de fonction permettant de restreindre des fonctions exécutables conformément à une opération d'un utilisateur ;
moyen de commande d'affichage d'état restreint permettant d'effectuer un affichage indiquant que la fonction est restreinte, dans un état de restriction de la fonction par le moyen de restriction de fonction ;
moyen d'annulation d'état restreint permettant d'annuler l'état de restriction de la fonction, conformément à une opération d'un utilisateur ;
un bouton de réinitialisation (15) qui est actionné au moment de réinitialiser un corps principal de l'appareil pour retrouver un état initial,
**caractérisé par**
un moyen de commande d'affichage de liste d'éléments restreints permettant de faire afficher par une unité d'affichage (16) une liste d'une pluralité d'éléments qui sont objets d'une restriction de fonction,
dans lequel
le moyen de restriction de fonction est configuré pour restreindre une fonction d'un élément sélectionné dans la liste de la pluralité d'éléments qui est affichée par le moyen de commande d'affichage de liste d'éléments restreints ; et
un moyen de commande de désactivation de réinitialisation permettant d'empêcher une réinitialisation vers l'état initial même si le bouton de réinitialisation (15) est actionné, dans un état de restriction de la fonction.

9. Programme lisible par ordinateur selon la revendication 8, le programme étant un programme permettant de commander un ordinateur d'un appareil électronique (10) incluant une fonction " dictionnaire ", et comprenant, en outre :
un moyen de production de son permettant de produire un son pendant une durée fixée lorsque la restriction est annulée par le moyen d'annulation d'état restreint,
dans lequel
le moyen de commande d'affichage d'état restreint est configuré pour effectuer un affichage indiquant que la fonction de l'élément sélectionné est restreinte, dans un état de restriction de la fonction de l'élément sélectionné par le moyen de restriction de fonction.

10. Programme lisible par ordinateur selon la revendication 9, comprenant, en outre :
un moyen d'acceptation d'opération de désignation d'élément permettant d'accepter une opération de désignation d'un ou de plusieurs éléments dans la liste de la pluralité d'éléments qui est affichée par le moyen de commande d'affichage de liste d'éléments restreints ;
dans lequel le moyen de restriction de fonction est configuré pour restreindre une fonction du ou des éléments dont la désignation a été acceptée par le moyen d'acceptation d'opération de désignation d'élément ; et
le moyen de commande d'affichage d'état restreint est configuré pour effectuer un affichage indiquant que les fonctions du ou des éléments sont restreintes et sont différenciées les unes des autres en fonction d'une combinaison du ou des éléments, dans un état de restriction des fonctions du ou des éléments par le moyen de restriction de fonction.
